# EUROPEAN PATENT APPLICATION

(11) **EP 0 521 484 A1**
(43) Date of publication of application: **07.01.1993**
(21) Application number: 92111151.4
(22) Date of filing: 01.07.1992
(51) Int. Cl.: G06F 13/36, G06F 13/42

(54) **Information transfer system**

(30) Priority: 01.07.1991 JP 159384/91
(71) Applicant: MITSUBISHI DENKI KABUSHIKI KAISHA, Chiyoda-ku Tokyo (JP)
(72) Inventor: Kitaoka, Yuzo, c/o Mitsubishi Denki K.K., Amagasaki-shi, Hyogo-ken (JP)
(74) Representative: Pfenning, Meinig & Partner

(57) **Abstract**

First and second devices are interconnected by second communication means other than first communication means, and control information is transmitted from the first device to the control section of the second device through the second communication means so that the interface section of the second device can be switched from an initiator to a target, or from a target to an initiator.

## Description

### Background of the Invention

### [Field of the Invention]

The present invention relates to a system for transferring information between such devices as an electronic filing device, an optical disk unit and a controller by interconnecting these devices by means of such communication means as a small computer systems interface (SCSI).

### [Description of the Prior Art]

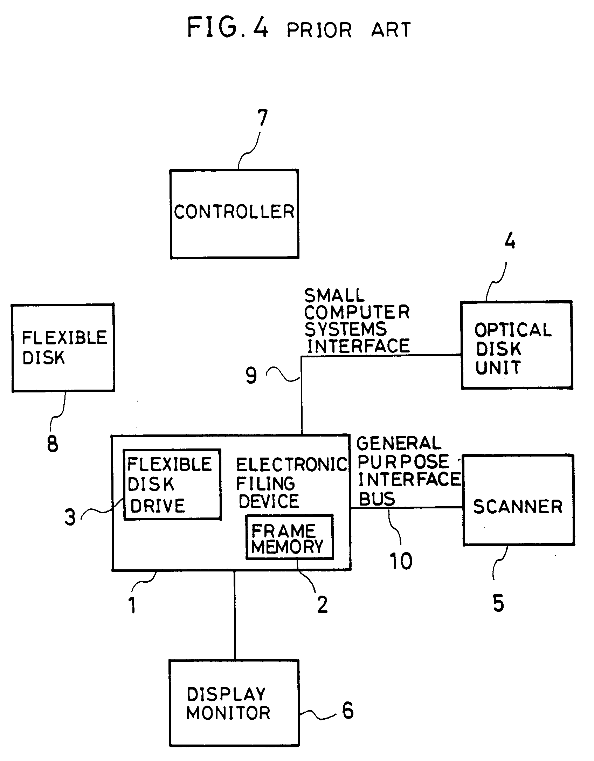

FIG.4 is a schematic diagram of the configuration of an electronic filing system which applies a prior art information transfer system such as disclosed in "Image Information Recording" on p.7 to 12 of the ITEJ Technical Report Vol.12 No.40 released by ITEJ in October 1988. In the figure, reference numeral 1 represents an electronic filing device for filing and retrieving image, voice and text data, 2 and 3 a frame memory and a flexible disk drive built in the electronic filing device 1, respectively, 4 an optical disk unit for storing image, voice and text data, 5 a scanner for reading image data, 6 a display monitor, 7 a controller which is a personal computer, 8 a flexible disk, 9 a small computer systems interface (SCSI) for interconnecting the electronic filing device 1 and the optical disk unit 4, and 10 a general purpose interface bus (GPIB) for interconnecting the electronic filing device 1 and the scanner 5.

The operation of the electronic filing system will be described hereafter. The SCSI 9 enables high-speed digital transfer. The interface section of the electronic filing device 1 connected to one end of the SCSI 9 is set as an initiator. In other words, the electronic filing device 1 functions as a master for transmitting a command over the SCSI 9. Furthermore, the interface section of the optical disk unit 4 connected to the other end of the SCSI 9 is set as a target. In other words, the optical disk unit 4 functions as a slave for receiving a command over the SCSI 9.

As a result, the electronic filing device 1 reads image files stored in the optical disk unit 4 through the SCSI 9 to store them in the frame memory 2 and at the same time display them on the display monitor 6.

Moreover, the electronic filing device 1 reads image data from the scanner 5 through the GPIB 10 to store it in the frame memory 2 and at the same time display it on the display monitor 6. Furthermore, the device transmits the data to the optical disk unit 4 through the SCSI 9 to store it as an image file.

Since the conventional electronic filing system is structured as described above, it has been difficult to achieve high-speed information transfer between devices of the electronic filing system utilizing the high functions of the controller 7. In other words, the controller 7 comprises the SCSI to enable high-speed transfer processing. However, the interface section of the controller 7 is normally set as an initiator over the SCSI. As a result, transfer of image data between the electronic filing device which functions as an initiator and the controller 7 which also functions as an initiator is impossible. Therefore, the flexible disk 8 and the flexible disk drive 3 are used to receive image data, or another type of interface such as an RS232C interface (unshown) is used for two-way data transfer between the electronic filing device 1 and the controller 7, but its transfer speed is slow.

The concept that an initiator section and a target section are provided to a host computer and a printer interconnected by an SCSI, respectively, to enable two-way command transfer is proposed in Japanese Laid-Open Patent Publication No.2-60781 for example, wherein these two functions are switched through linkage of various phenomena peculiar to each device. However, the mechanism is very complex and cannot be applied in the present invention which requires high operability and high-speed processing.

### Summary of the Invention

The present invention has been worked out to overcome the above problems, and it is an object of the present invention to achieve an efficient and high-speed information transfer system which is responsive to a command from a communicating device to switch between transmission and reception modes quickly.

The information transfer system of the present invention connects devices by means of second communication means other than the conventional communication means so that one of the devices transmits control information to the control section of the other device through the second communication means to switch the interface section of the other device from an initiator to a target or from a target to an initiator.

Owing to such a structure as described above, when both of the interface sections of these devices function as an initiator over the communication means, it is impossible for these devices to transmit and receive commands. However, one of the devices transmits control information to the control section of the other device through the second communication means whereby the control section of the other device changes the interface section thereof from an initiator to a target. As a result, the respective interface sections of these devices become an initiator and a target so that the former device can transmit a command to the latter device, thus making possible desired information transfer between these devices.

The above and other objects, features and advantages of the invention will become more apparent from the following description when taken in conjunction with the accompanying drawings.

### Brief Description of the Drawings

FIG.1 is a diagram of the configuration of an electronic filing system according to an embodiment of the present invention;
FIG.2 is a flow chart for explaining the operation of the system of FIG.1;
FIG.3 is a diagram of the configuration of an electronic filing system according to another embodiment of the present invention; and
FIG.4 is a diagram of the configuration of the conventional electronic filing system.

### Description of the Preferred Embodiment

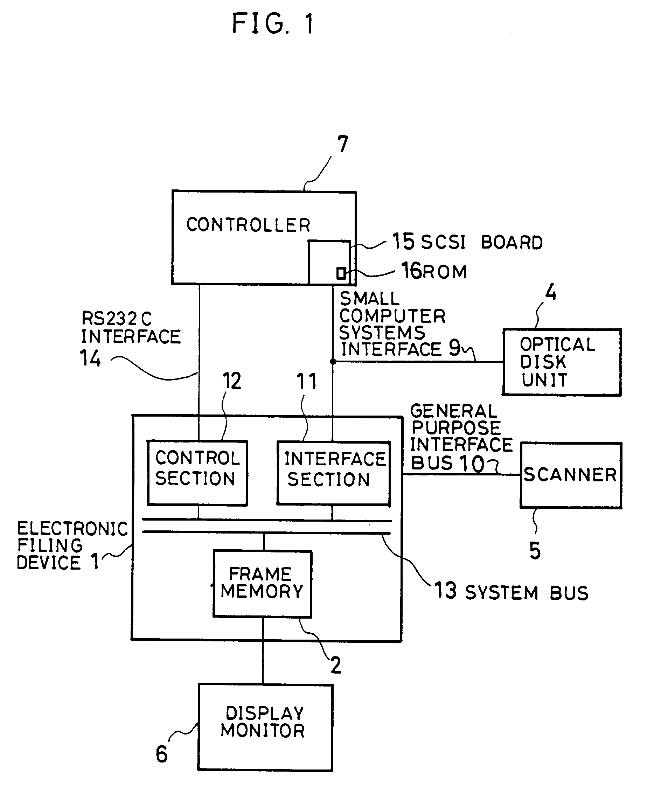

FIG.1 is a schematic diagram illustrating the configuration of an electronic filing system according to an embodiment of the present invention. In the figure, reference numeral 11 represents an interface section provided in the electronic filing device 1 which is one communicating device and having a function to connect the SCSI 9 and GPIB 10, 12 the control section of the electronic filing device 1 for transmitting a command to the interface section 11 through a system bus 13 for management and functioning as the interface section of an RS232C interface 14 which will be described hereafter.

Reference numeral 15 designates an SCSI board which is inserted into the extension slot of a general personal computer which constitutes a controller 7 for controlling a magnetic disk (unshown). This SCSI board 15 incorporates software for controlling the SCSI 9 as a ROM 16, but can be an initiator over the SCSI 9. The controller 7, which is the other communicating device, comprises as a standard function the RS232C interface 14 which connects the control section 12 of the electronic filing device 1 and the controller 7 as second communication means.

The operation of the electronic filing system will be described next. The electronic filing device 1 transmits a command from the control section thereof through the system bus 13 to the interface section 11 thereof. According to the command, the interface section 11, which is an initiator, reads an image file stored in the optical disk unit 4 through the SCSI 9, and stores the file in the frame memory 2 through the system bus 13 and at the same time displays it on the display monitor 6.

The electronic filing device 1 also transmits a command from the control section 12 thereof through the system bus 13 to the interface section 11 thereof. According to the command, the interface section 11, which is an initiator, reads image data from the scanner 5 through the GPIB 10, and stores the data in the frame memory 2 through the system bus 13 and at the same time displays it on the display monitor 6.

Furthermore, the electronic filing device 1 transmits a command from the control section 12 thereof through the system bus 13 to the interface section 11 thereof. According to the command, the interface section 11, which is an initiator, transmits information in the frame memory 2 to the optical disk unit 4 through the system bus 13 and the SCSI 9 in order to store it as an image file.

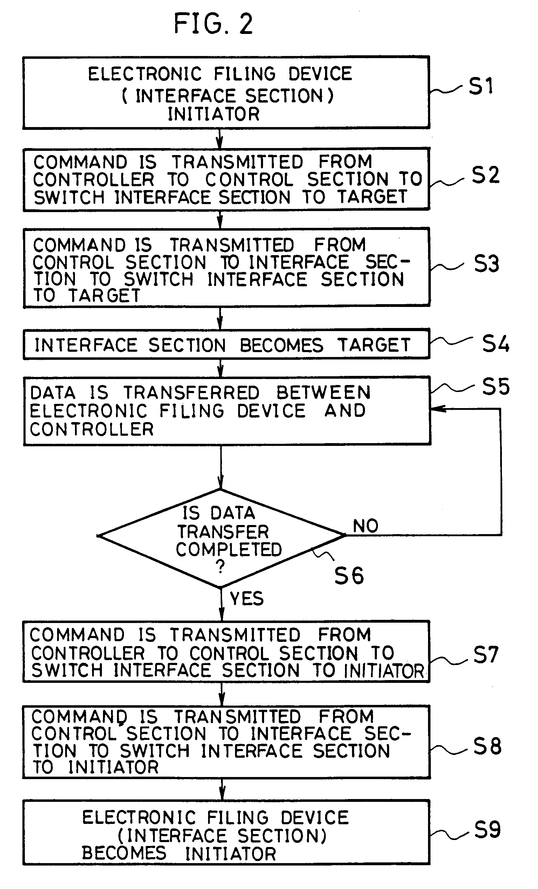

The operation of the electronic filing system when a command is supplied from the controller 7 to the electronic filing device 1 for desired data transfer will be explained with reference to the flow chart of FIG.2. Since the interface section 11 of the electronic filing device 1 is now an initiator (S1), a command is first supplied from the controller 7 through the RS232C interface 14 to the control section 12 of the electronic filing device 1 to switch the interface section 11 from an initiator to a target (S2). According to the command, the control section 12 transmits the command through the system bus 13 to the interface section 11 to switch the interface section from an initiator to a target (S3). When the interface section 11 becomes a target according to the command (S4), a control command transmitted from the controller 7 through the SCSI 9 is received by the interface section 11 of the electronic filing device 1 so that image data can be transferred from the controller 7 to the interface section 11 of the electronic filing device 1 (S5), and stored in the frame memory 2 through the system bus 13 and at the same time displayed on the display monitor 6.

When data transfer is completed (S6), a command is transmitted from the controller 7 through the RS232C interface 14 to the control section 12 of the electronic filing device 1 to switch the interface section 11 from a target to an initiater (S7). The control section 12 transmits the command to the interface section 11 through the system bus 13 to switch the interface section 11 from a target to an initiator (S8). The interface section 11 returns to an initiator according to the command (S9). When data transfer from the controller 7 to the electronic filing device 1 is completed, the interface section may automatically return to an initiator through the operation of an unshown timer.

As occasion demands, the electronic filing device 1 transmits image data from the controller 7 to the frame memory 2, the interface section 11, which is now an initiator, through the system bus, and the optical disk unit 4, which is a target, through the SCSI 9 to store it as an image file. Furthermore, a command is transmitted from the controller 7 to the electronic filing device 1 with the interface section 11 of the electronic filing device 1 set as a target so that image data can be transferred from the electronic filing device 1 to the controller 7.

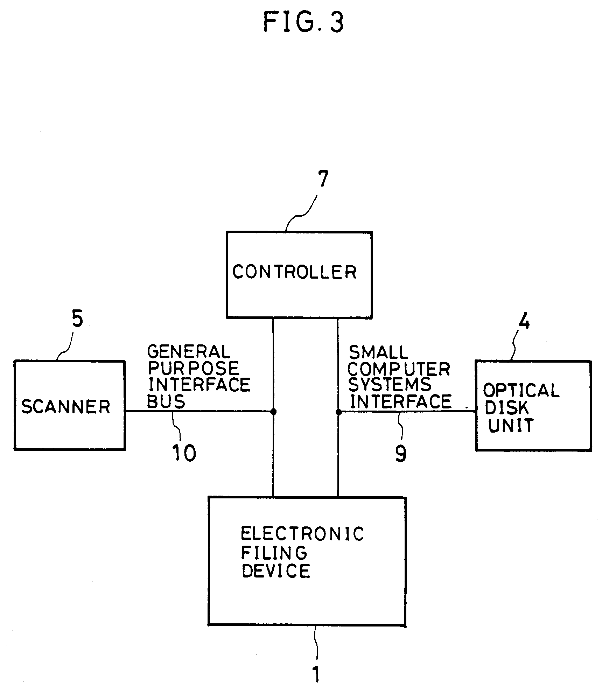

In the above embodiment, the RS232C interface 14 is used as second communication means for switching between initiator and target. However, as shown in FIG.3, the GPIB 10 which is used to connect the electronic filing device 1 and the scanner 5 as a third device may be used as third communication means for this purpose.

Furthermore, interfaces other than the RS232C interface and the GPIB may be used. In addition, transferred data is not limited to image data, but may be text data and voice data. The present invention is not limited to an electronic filing system, and can be widely applied to systems for transferring information between devices through communication means. In this case, the same effects as the electronic filing system can be achieved.

Since the present invention is structured as described in the foregoing, transmission/reception modes for communicating devices can be switched quickly with a simple structure, thus making possible efficient and high-speed information transfer.

## Claims

1. An information transfer system in which first and second devices are interconnected by communication means and the interface section of said second device connected to said communication means is set as either an initiator which functions as a master for transmitting a command or a target which functions as a slave for receiving a command over said communication means by the control section of said second device for managing the interface section of said second device, characterized in that
said first and second devices are interconnected by second communication means other than said communication means, and control information is transmitted from said first device through said second communication means to said control section of said second device so that said interface section of said second device can be switched from an initiator to a target, or from a target to an initiator.

2. The information transfer system according to claim 1, wherein
the system has a function to enable the transmission and reception of image data, text data or voice data between said first and second devices.

3. The information transfer system according to claim 1, wherein
said first device consists of a personal computer, and said second device consists of an electronic filing device having a frame memory, a display monitor and other devices.

4. An information transfer system in which first and second devices are interconnected by communication means and the interface section of said second device connected to said communication means is set as either an initiator which functions as a master for transmitting a command or a target which functions as a slave for receiving a command over said communication means by the control section of said second device for managing the interface section of said second device, characterized in that
said first and second devices are interconnected by second communication means other than said communication means, and control information is transmitted from said first device through said second communication means to said control section of said second device so that said interface section of said second device can be switched from an initiator to a target, or from a target to an initiator; and
that after the interface section of said second device is switched to an initiator or a target through said second communication means, the interface section automatically returns to a target or an initiator through the operation of a timer.

5. An information transfer system in which first and second devices are interconnected by communication means, said second device is connected to a third device through the interface section thereof, the interface section of said second device connected to said communication means is set as either an initiator which functions as a master for transmitting a command or a target which functions as a slave for receiving a command over said communication means by the control section of said second device for managing the interface section of said second device, characterized in that
said first and second devices are interconnected by another communication means using an interface for connecting said third device, and said first device transmits control information to the control section of said second device through said second communication means so that said interface section of said second device can be switched from an initiator to a target, or from a target to an initiator.
